(19) Europäisches Patentamt
European Patent Office
Office européen des brevets

(11) **EP 1 310 761 B1**

(12) **EUROPÄISCHE PATENTSCHRIFT**

(45) Veröffentlichungstag und Bekanntmachung des Hinweises auf die Patenterteilung:
**28.01.2009 Patentblatt 2009/05**

(21) Anmeldenummer: **01126735.8**

(22) Anmeldetag: **09.11.2001**

(51) Int Cl.:
*G01B 3/22* (2006.01)  *G01B 5/02* (2006.01)
*G01B 5/06* (2006.01)  *F16G 5/00* (2006.01)

(54) **Verfahren zur Bestimmung des Verschleisszustandes von Keilrippenriemen**

Method for determining the wear of v-ripped belts

Procédé pour déterminer l'usure de courroies à nervures en V

(84) Benannte Vertragsstaaten:
**AT BE CH CY DE DK ES FI FR GB GR IE IT LI LU MC NL PT SE TR**

(43) Veröffentlichungstag der Anmeldung:
**14.05.2003 Patentblatt 2003/20**

(73) Patentinhaber:
- **ContiTech Antriebssysteme GmbH**
  **30165 Hannover (DE)**
- **Bayerische Motoren Werke Aktiengesellschaft**
  **80788 München (DE)**

(72) Erfinder:
- **Moses, Reinhold**
  **37632 Eimen (DE)**
- **Tomaschek, Peter**
  **82205 Gilching (DE)**
- **Lemberger, Heinz**
  **85774 Unterföhring (DE)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
**US-A- 3 477 133**     **US-A- 3 940 856**

- **PATENT ABSTRACTS OF JAPAN vol. 2000, no. 06, 22. September 2000 (2000-09-22) & JP 2000 074603 A (MITSUBOSHI BELTING LTD), 14. März 2000 (2000-03-14)**
- **PATENT ABSTRACTS OF JAPAN vol. 2000, no. 26, 1. Juli 2002 (2002-07-01) & JP 2001 241922 A (MITSUBOSHI BELTING LTD), 7. September 2001 (2001-09-07)**
- **PATENT ABSTRACTS OF JAPAN vol. 2000, no. 23, 10. Februar 2001 (2001-02-10) & JP 2001 153645 A (MITSUBOSHI BELTING LTD), 8. Juni 2001 (2001-06-08)**
- **PATENT ABSTRACTS OF JAPAN vol. 1999, no. 03, 31. März 1999 (1999-03-31) -& JP 10 332307 A (MITSUBOSHI BELTING LTD), 18. Dezember 1998 (1998-12-18)**

**Beschreibung**

Ein Keilrippenriemen umfasst eine Vielzahl von im Querschnitt annähernd gleichen, etwa V- oder trapezförmigen Profilrippen, die über einen gemeinsamen Keilriemenrücken miteinander verbunden sind. Diese zueinander parallelen und in Längsrichtung des Keilrippenriemens verlaufenden Profilrippen weisen zwischen sich etwa V-förmige Profilrillen auf.

Keilrippenriemen werden üblicherweise in Keilriementrieben eingesetzt, die wiederum vielfach im Kraftfahrzeug Verwendung finden, wo es gilt, eine Vielzahl von Aggregaten wie die Lichtmaschine, die Wasserpumpe oder eine Lenkhilfe durch eine auf die Kurbelwelle aufgesetzte Riemenscheibe anzutreiben. Ebenso erfolgt der Einsatz in Haushaltsmaschinen, beispielsweise in Waschautomaten und Wäschetrocknern. Der Keilriementrieb besteht hierbei aus einem Keilrippenriemen und mindestens zwei Keilrippenriemenscheiben.

Die bewegungsübertragenden, mit den Riemenscheiben zusammenwirkenden Riemenoberflächen unterliegen einer hohen mechanischen Beanspruchung. Diese Beanspruchung führt zu einem die Lebensdauer des Keilrippenriemens beeinträchtigenden Abrieb oder Verschleiß an den Flanken der einzelnen Profilrippen.

Aus der JP 2000-074603 ist eine Vorrichtung zur Bestimmung der Abnutzung von Keilrippenriemen bekannt, die lediglich die Abnutzung am Boden der Profilrillen und nicht an den Flanken der einzelnen Profilrippen bestimmt. Die Vorrichtung umfasst ein flaches Kontaktteil, das gegen die Oberfläche der Rückseite eines Keilrippenriemens drückbar ist, und ein weiteres Kontaktteil mit hervorstehendem Kontaktsegment, das auf den Boden der Profilrillen bringbar ist, und dessen Breite schmaler ist als die Profilrillenbreite. Die Vorrichtung umfasst außerdem ein Anzeigeteil, das den Abstand zwischen dem flachen Kontaktteil und dem Kontaktsegment des anderen Kontaktteils anzeigt. Zur Bestimmung der Abnutzung wird ein Keilrippenriemen zwischen die auseinandergezogenen Kontaktteile gebracht, wobei das flache Kontaktteil die Rückseite des Keilrippenriemens berührt. Anschließend wird das flache Kontaktteil in Richtung des anderen Kontaktteils verschoben, bis das Kontaktsegment des anderen Kontaktteils den Boden der Profilrillen berührt. Schließlich wird die Skala eines Leseteils abgelesen und der Abstand zwischen der Rückseite des Keilrippenriemens und des Bodens der Profilrille bestimmt.

In dem Dokument JP-A-10332307 wird die Dikke eines Keilrippenriemens mit Hilfe einer Messuhr bestimmt, wobei ein Kontaktteil wiederum den Boden des Keilrippenriemens berührt.

Dadurch kann also nur die Abnutzung am Boden der Profilrille bestimmt werden. Die Vorrichtung ist aber nicht geeignet, um den Verschleißzustand zu bestimmen, der sich aus dem Abrieb an den Flanken der Profilrippen des Keilrippenriemens ergibt.

Ein solcher Abrieb oder Verschleiß an den Flanken führt dazu, dass die Funktion des Keilrippenriemens ab einem bestimmten Verschleißzustand nicht mehr sichergestellt ist, und der Keilrippenriemen ausgewechselt werden muss.

Bisher wird dieser Verschleißzustand eines Keilrippenriemens durch bloßes Inaugenscheinnehmen beurteilt. Es hat sich gezeigt, dass diese subjektive Prüfung des Keilrippenriemens häufig zu Fehlbeurteilungen führt, da sie vom jeweiligen Prüfer abhängen. So werden Keilrippenriemen entweder zu früh ausgewechselt, obwohl sie ihre Funktion durchaus noch erfüllen, oder sie werden überhaupt nicht ausgetauscht, obwohl sie eigentlich zur Vermeidung einer Fehlfunktion hätten ausgewechselt werden müssen.

Der Erfindung liegt die Aufgabe zugrunde, ein Verfahren für ein objektives Prüfen des Verschleißzustandes von Keilrippenriemen zu schaffen, das möglichst einfach, schnell und zuverlässig, insbesondere von den Mitarbeitern der zur Prüfung der Keilrippenriemen üblichen Werkstätten, anwendbar ist.

Eine erfindungsgemäße Lösung der Aufgabe betrifft ein Verfahren zur Bestimmung des Verschleißzustandes von Keilrippenriemen mit Profilrippen und Profilrillen, bei dem zunächst die einfache Höhe des zu prüfenden Keilrippenriemens als Bezugswert bestimmt wird. Anschließend werden zwei Abschnitte des benutzten Keilrippenriemens derart übereinandergelegt und zusammengedrückt, dass die Profilrippen des einen Abschnitts in die Profilrillen des anderen Abschnitts greifen und diese berühren. Daraufhin wird die Gesamthöhe der zwei übereinanderliegenden Abschnitte bestimmt, wobei die Gesamthöhe in Abhängigkeit von der einfachen Höhe ein Maß für den Verschleißzustand des Keilrippenriemens ist.

Dadurch wird erstmals eine überraschend einfaches Verfahren zur objektiven Bestimmung des Verschleißzustandes von Keilrippenriemen zur Verfügung gestellt, wobei sich die Erkenntnis zunutze gemacht wird, dass die Gesamthöhe der übereinandergelegten bzw. ineinandergesteckten Keilrippenriemenabschnitte umso geringer ist, je mehr die Flanken der einzelnen Profilrippen abgenutzt sind. Es hat sich nämlich gezeigt, dass die Profilrippen der Keilrippenriemen durch den Abrieb ihrer Flanken schmaler und die Profilrillen der Keilrippenriemen entsprechend breiter werden, so dass die Profilrippen des einen Keilrippenriemenabschnitts tiefer in die Profilrillen des anderen Keilrippenriemenabschnitts greifen können, wodurch die Gesamthöhe der übereinandergelegten Abschnitte geringer wird. Die einfache Höhe der Keilrippenriemen bleibt dagegen im wesentlichen konstant.

Da die Höhe der Keilrippenriemen trotz Abrieb der Flanken in der Regel konstant bleibt, kann diese als Bezugswert für die Beurteilung des Verschleißzustandes des Keilrippenriemens verwendet werden. Die einzelnen Abweichungen der Gesamthöhe von der im Wesentlichen konstanten einfachen Höhe entsprechen dann einzelnen Verschleißzuständen. Die Zuordnung der durch das objektive Prüfen festgestellten Abweichungen zu denjenigen Verschleißzuständen, die einen Wechsel des Keilrippenriemens erforderlich machen, kann empirisch erfolgen. Die entsprechenden Werte könnten dann beispielsweise einer Tabelle entnommen werden.

Vorzugsweise wird die Überdeckung der Profilrippen der übereinandergelegten Abschnitte aus dem zweifachen Bezugswert abzüglich der Gesamthöhe bestimmt, wobei die Überdeckung proportional zum Verschleißzustand des Keilrippenriemens ist. Das Ausmaß der Überdeckung ist also direkt abhängig vom Abrieb und damit vom Verschleißzustand des Keilrippenriemens.

Eine andere erfindungsgemäße Lösung der Aufgabe betrifft ein Verfahren zur Bestimmung des Verschleißzustandes von Keilrippenriemen mit Profilrippen und Profilrillen, bei dem zunächst ein Referenzstück mit vorgegebenen Profilrippen und Profilrillen hergestellt wird. Das Referenzstück kann dabei ein Keilrippenriemen im Neuzustand oder im benutzten Zustand darstellen. Daneben wird die einfache Höhe des Keilrippenriemens bestimmt. Anschließend werden das Referenzstück und ein Abschnitt des benutzten Keilrippenriemens derart übereinandergelegt und zusammengedrückt, dass die Profilrippen des Keilrippenriemens in die Profilrillen des Referenzstücks greifen und diese berühren. Daraufhin wird die Gesamthöhe der zwei übereinanderliegenden Abschnitte bestimmt wird, wobei die Gesamthöhe in Abhängigkeit von der einfachen Höhe ein Maß für den Verschleißzustand des Keilrippenriemens ist.

Dieses erfindungsgemäße Verfahren unterscheidet sich von den vorgenannten Verfahren dadurch, dass nicht zwei Abschnitte des benutzten Keilrippenriemens übereinandergelegt werden, sondern nur ein Abschnitt des benutzten Keilrippenriemens und ein Referenzstück. Das Prinzip der objektiven Prüfung des Verschleißzustandes bleibt gleich, so dass auf das oben Gesagte verwiesen werden kann. Das hier genannte Verfahren hat jedoch den Vorteil, dass der Verschleißzustand auch bei Keilrippenriemen feststellbar ist, bei denen es schwierig ist, zwei Abschnitte des Keilrippenriemens übereinander zu legen. Der Keilrippenriemen braucht gegebenenfalls nicht aus dem Fahrzeug oder Motor ausgebaut zu werden.

Somit wird auch hier ein einfaches, schnelles und zuverlässiges Verfahren zur objektiven Bestimmung des Verschleißzustandes von Keilrippenriemen zur Verfügung gestellt.

Vorzugsweise wird bei diesem Verfahren die Überdeckung der Profilrippen der übereinandergelegten Abschnitte aus der Summe der vorgegebenen Höhe des Referenzstücks und der einfachen Höhe der Keilrippenriemens abzüglich der Gesamthöhe der übereinandergelegten Abschnitte bestimmt, wobei die Überdeckung auch hier proportional zum Verschleißzustand des Keilrippenriemens ist. Das Ausmaß der Überdeckung ist also direkt abhängig vom Abrieb der Flanken der Profilrippen und damit vom Verschleißzustand des Keilrippenriemens.

Zur Durchführung der erfindungsgemäßen Verfahren kann eine Vorrichtung Verwendung finden, die eine Messuhr mit einem Gehäuse und einer Anzeigeeinrichtung enthält, die eine drehbare Skala zur Einstellung eines Nullwertes und einen gegenüber der Skala bewegbaren Zeiger aufweist, sowie mit einem Messbolzen, der gegenüber dem Gehäuse verschiebbar ist und dessen Verschiebungsweg über ein geeignetes System auf den Zeiger übertragbar ist. Eine derartige Vorrichtung enthält außerdem eine Halterung, in welche die Messuhr einsetzbar ist. Die Halterung umfasst eine Auflagefläche zur Aufnahme des mittels des Messbolzens zu vermessenden Objects.

Ähnliche Vorrichtungen, bei denen Dimensionen eines Messobjekts mit Hilfe einer Messuhr mit drehbarer Skala vermessen werden, sind z.B. aus US-A-3477133 oder US-A-3940856 bekannt.

Durch eine erste Messung der einfachen Höhe des Keilrippenriemens ist der Nullwert der Skala einstellbar. Durch die anschließende Messung der Gesamthöhe der beiden übereinandergelegten Abschnitte des Keilrippenriemens bzw. der übereinandergelegten Abschnitte des Referenzstücks und des Keilrippenriemens ist die Abweichung vom Nullwert anzeigbar, wobei die Abweichung ein Maß für den Verschleißzustand des Keilrippenriemens ist. Die Skala ist dazu in vorgegebene Bereiche eingeteilt, die bestimmte Verschleißzustände des Keilrippenriemens angeben.

Mit der verfahrensgemäßen Lösung ist es auf besonders einfache Weise möglich, den Verschleißzustand der Keilrippenriemen objektiv zu bestimmen. Durch die Einteilung der Skala in vorgegebene Bereiche ist dem Prüfer des Keilrippenriemens eine schnelle und zuverlässige Beurteilung der Funktionsfähigkeit des Keilrippenriemens möglich. Die Größe und Anordnung der auf der Skala angeordneten Bereiche, die den Verschleißzustand des Keilrippenriemens angeben, kann sich aus empirisch ermittelten Werten ergeben, wobei auch bestimmte Toleranzbereiche berücksichtigt werden können.

Eine Vorrichtung zur Durchführung des mit einem Referenzstück funktionierenden Verfahrens sieht vor, dass auf einer Seite der Auflagefläche ein Körper mit ebener Oberfläche angeordnet ist, auf den der Keilrippenriemen zur Messung der einfachen Höhe und zur Einstellung des Nullwertes bringbar ist, und dass auf der anderen Seite der Auflagefläche das Referenzstück angeordnet ist, wobei die Auflagefläche derart drehbar ist, das entweder der Körper oder das Referenzstück der Messung zugänglich ist. Vorzugsweise ist der Körper derart breit, dass er 2/3 der Keilrippenriemenbreite umfasst.

Diese Weiterbildung der Vorrichtung ermöglicht dem Prüfer ein einfaches und zuverlässiges Handhaben der Vorrichtung, da kein separater Körper zur Bestimmung der einfachen Höhe des Keilrippenriemens und damit zur Einstellung des Nullwertes als Bezugswert mitgeführt werden muss. In gleicher Weise muss kein separates Referenzstück mitgeführt werden. Gerade bei Keilrippenriemen, die sich an schlecht zugänglichen Stellen befinden, wird durch diese Vorrichtung verhindert, dass das Referenzstück oder der Körper von der Auflagefläche rutscht und verloren geht.

In einer vorteilhaften Ausführung einer Messvorrichtung ist die Skala der Messuhr in wenigstens drei Bereiche aufgeteilt, wobei ein erster Bereich eine Markierung zur Einstellung des Nullwertes umfasst und die anderen beiden Bereiche den Verschleißzustand des Keilrippenriemens kennzeichnen. Dabei gibt der eine Bereich den Zustand des Keilrippenriemens als "in Ordnung" oder dergleichen an. Während der andere Bereich den Zustand des Keilrippenriemens als "nicht in Ordnung" oder dergleichen angibt.

Dadurch wird erreicht, dass der Prüfer einfach, schnell und zuverlässig den Verschleißzustand des Keilrippenriemens als für die Funktion des Keilrippenriemens bedenklich oder unbedenklich einstufen kann. Dementsprechend ist der Keilrippenriemen entweder auszuwechseln oder weiter benutzbar.

Selbstverständlich kann die Messuhr zur Durchführung der erfindungsgemäßen Verfahren Vorrichtung auch mit einer elektronischen Anzeigeeinrichtung ausgebildet sein, wobei dann bestimmte Verschleißzustände des Keilrippenriemens in Textform anzeigbar sind.

Nachfolgend wird die Erfindung anhand von Ausführungsbeispielen erläutert, die in der Zeichnung dargestellt sind. In dieser zeigen:

Fig. 1 eine schematische Darstellung von zwei übereinanderliegenden Abschnitten eines Keilrippenriemens,

Fig. 2 eine schematische Darstellung der drehbaren Skala während der Bestimmung der einfachen Höhe eines Keilrippenriemens,

Fig. 3 eine schematische Darstellung der drehbaren Skala während der Bestimmung der Gesamthöhe der übereinandergelegten Abschnitte eines Keilrippenriemens,

Fig. 4 eine schematische Darstellung einer Vorrichtung zur Durchführung des erfindungsgemäßen Verfahrens und

Fig.5 eine schematische Darstellung einer Vorrichtung zur Durchführung des mit einem Referenzstück funktionierenden erfindungsgemäßen Verfahrens.

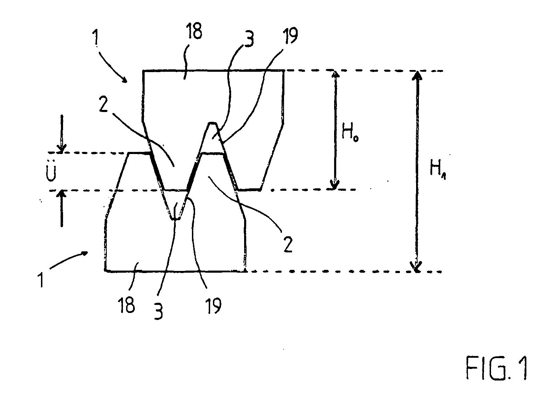

Fig. 1 zeigt eine schematische Darstellung von zwei übereinanderliegenden Abschnitten eines Keilrippenriemens.

Ein Keilrippenriemen 1 umfasst eine Vielzahl von im Querschnitt annähernd gleichen Profilrippen 2, die über einen gemeinsamen Keilrippenriemenrücken 18 miteinander verbunden sind. Diese zueinander parallelen und in Längsrichtung des Keilrippenriemens 1 verlaufenden Profilrippen 2 weisen zwischen sich etwa V-förmige Profilrillen 3 auf. Der Einsatz eines Keilrippenriemens 1 führt zu einem Abrieb an den Flanken 19 der einzelnen Profilrippen 3, der die Funktionsfähigkeit des Keilrippenriemens 1 beeinträchtigt. Je nach Stärke des Abriebs ergeben sich unterschiedliche Verschleißzustände.

Die Erfindung betrifft nun ein Verfahren zur Bestimmung dieser Verschleißzustände. Zur Verdeutlichung des Prinzips sind die in Fig. 1 gezeigten Abschnitte des Keilrippenriemens 1 nur mit jeweils zwei Profilrippen 2 und dazwischenliegender Profilrille 3 dargestellt.

Erfindungsgemäß wird zunächst die einfache Höhe $H_0$ des zu prüfenden, also benutzten Keilrippenriemens 1 als Bezugswert bestimmt. Die einfache Höhe $H_0$ wird am benutzten Keilrippenriemen bestimmt, um die bei der Herstellung der einzelnen Keilrippenriemen auftretenden Höhentoleranzen auszuschalten. Anschließend werden - wie in Fig. 1 dargestellt - zwei Abschnitte des benutzten Keilrippenriemens 1 übereinandergelegt und so zusammengedrückt, dass die Profilrippen 2 des einen Abschnitts in die Profilrillen 3 des anderen Abschnitts greifen. Schließlich wird die Gesamthöhe $H_1$ der zwei übereinanderliegenden Abschnitte bestimmt. Die Abweichung der Gesamthöhe $H_1$ von der einfachen Höhe $H_0$ ist ein Maß für den Verschleißzustand des Keilrippenriemens 1.

Dabei ist die Überdeckung Ü der Profilrippen 3 proportional zum Verschleißzustand des Keilrippenriemens, wobei sich die Überdeckung Ü aus dem zweifachen Bezugswert $H_0$ abzüglich der Gesamthöhe $H_1$ ergibt:

$$\ddot{U} = 2 \cdot H_0 - H_1$$

Aus der Fig. 1 wird deutlich, dass die Überdeckung Ü und damit der Verschleißzustand des Keilrippenriemens 1 umso größer ist, je größer der Abrieb an den Flanken 19 der Profilrippen 2 ist. Durch den Abrieb an den Flanken 19 werden die Profilrippen 2 schmaler und können somit tiefer in die Profilrillen 3 greifen.

Ab einer vorgegebenen Überdeckung Ü erfüllt der Keilrippenriemen 1 seine Funktion nur noch ungenügend oder gar nicht, so dass ein Wechsel des Keilrippenriemen 1 zwingend erforderlich ist.

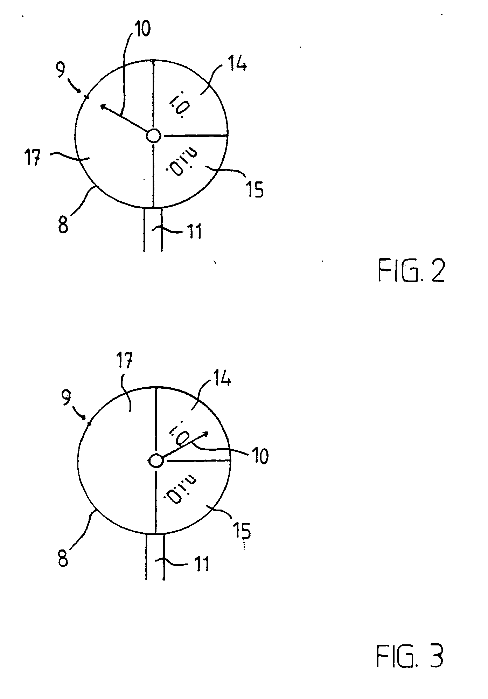

Fig. 2 zeigt eine schematische Darstellung der drehbaren Skala während der Bestimmung der einfachen Höhe eines Keilrippenriemens.

Die Skala 8 ist in drei Bereiche 14, 15 und 17 aufgeteilt, wobei ein erster Bereich 17 eine Markierung zur Einstellung des Nullwertes 9 umfasst.

Bei der Bestimmung der einfachen Höhe $H_0$ des

Keilrippenriemens 1 liegt der Messbolzen 11 der hier nicht dargestellten Messuhr 7 auf dem Keilrippenriemen 1 und die Skala 8 wird soweit gedreht, dass - wie dargestellt - die Markierung des ersten Bereichs 17 mit dem Ausschlag des Zeigers 10 übereinstimmt. Dadurch bildet die einfache Höhe $H_0$ des Keilrippenriemens 1 den Bezugswert bzw. den Nullwert 9 für nachfolgende Messungen.. Bei einer nachfolgenden Messung wird dann immer die Abweichung von diesem Nullwert 9 bestimmt.

Die anderen beiden Bereiche 14 und 15 kennzeichnen den Verschleißzustand des Keilrippenriemens 1. Der Bereich 14 gibt den Zustand des Keilrippenriemens 1 als "i. O.", also "in Ordnung" an. Befindet sich der Zeiger 10 bei Messung der übereinandergelegten Abschnitte des Keilrippenriemens 1 in diesem Bereich 14 ist ein Wechsel des Keilrippenriemens 1 noch nicht erforderlich. Der andere Bereich 15 gibt den Zustand des Keilrippenriemens 1 als "n. i. O.", also als "nicht in Ordnung" an. Wenn sich der Zeiger 10 bei Messung der übereinandergelegten Abschnitte des Keilrippenriemens 1 in diesem Bereich 15 bewegt, so ist ein Wechsel des Keilrippenriemens 1 notwendig.

Fig. 3 zeigt eine schematische Darstellung der drehbaren Skala während der Messung der Gesamthöhe der übereinandergelegten Abschnitte eines Keilrippenriemens.

Der Nullwert 9 ist in diesem Fall bereits eingestellt und wird durch die Markierung angezeigt. Nunmehr befinden sich die übereinandergelegten Abschnitte des Keilrippenriemens 1 unter dem Messbolzen 11 der hier nicht dargestellten Messuhr 7. Im Unterschied zu der in Fig. 2 dargestellten Skala 8 ist der Zeiger 10 aus der Nullstellung 9 in den Bereich 14 übergegangen, der den Zustand des Keilrippenriemens 1 als "i. O." angibt. Ein Wechsel des Keilrippenriemens 1 ist also noch nicht erforderlich.

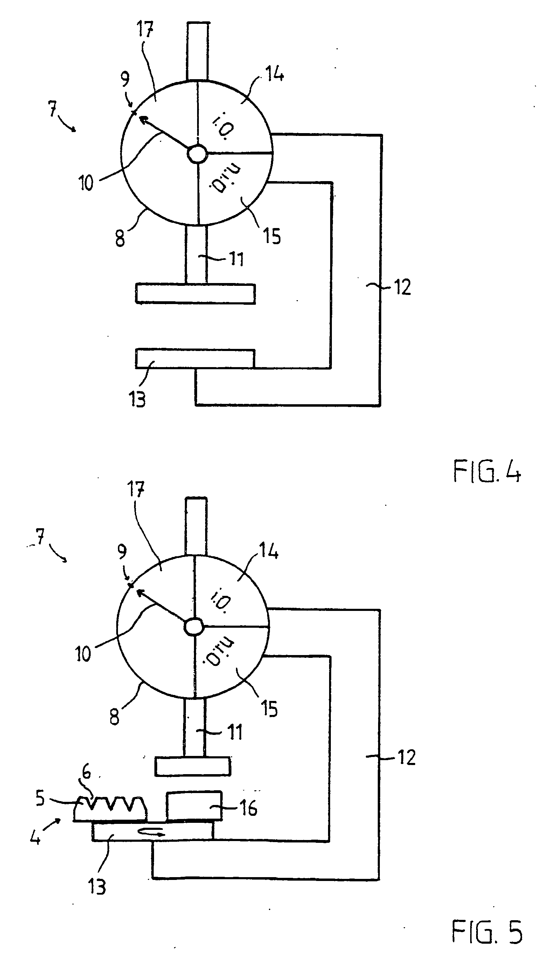

Fig. 4 zeigt eine schematische Darstellung einer Vorrichtung zur Durchführung des erfindungsgemäßen Verfahrens.

Die Vorrichtung umfasst eine Messuhr 7 mit einem hier nicht dargestellten Gehäuse und einer Anzeigeeinrichtung, die eine drehbare Skala 8 zur Einstellung eines Nullwertes 9 und einen gegenüber der Skala 8 bewegbaren Zeiger 10 aufweist, sowie mit einem Messbolzen 11, der gegenüber dem Gehäuse verschiebbar ist und dessen Verschiebungsweg über ein geeignetes System auf den Zeiger 10 übertragbar ist.

Außerdem umfasst die Vorrichtung eine Halterung 12, in welche die Messuhr 7 einsetzbar ist. Die Halterung 12 besitzt eine Auflagefläche 13 zur Aufnahme des mittels des Messbolzens 11 zu vermessenden Objekts.

Durch eine erste Messung der einfachen Höhe $H_0$ des hier nicht dargestellten Keilrippenriemens 1 ist der Nullwert 9 der Skala 8 einstellbar. Durch die anschließende Messung der Gesamthöhe $H_1$ der hier nicht dargestellten übereinandergelegten Abschnitte des Keilrippenriemens 1 bzw. der hier nicht dargestellten übereinandergelegten Abschnitte des Referenzstücks und des Keilrippenriemens ist die Abweichung vom Nullwert 9 anzeigbar, wobei die Abweichung ein Maß für den Verschleißzustand des Keilrippenriemens 1 ist. Die Skala 8 ist in vorgegebene Bereiche 14 und 15 eingeteilt, die bestimmte Verschleißzustände des Keilrippenriemens 1 angeben. Die Einteilung der Skala 8 entspricht der in den Fig. 3 und 4 gezeigten Einteilung.

Fig. 5 zeigt eine schematische Darstellung der Vorrichtung zur Durchführung des erfindungsgemäßen Verfahrens, bei dem ein Referenzstück Verwendung findet, welches den Keilrippenriemen im Neuzustand oder im benutzten Zustand darstellt.

Die Vorrichtung unterscheidet sich von der in Fig. 4 gezeigten Vorrichtung dadurch, dass auf einer Seite der Auflagefläche 13 ein Körper 16 mit ebener Oberfläche angeordnet ist, auf den der hier nicht dargestellte Keilrippenriemen 1 zur Messung der einfachen Höhe $H_0$ und zur Einstellung des Nullwertes 9 bringbar ist, und dass auf der anderen Seite der Auflagefläche 13 ein Referenzstück 4 angeordnet ist, wobei die Auflagefläche 13 derart drehbar ist, das entweder der Körper 16 oder das Referenzstück 4 der Messung zugänglich ist.

Dies ermöglicht dem Prüfer ein einfaches und zuverlässiges Handhaben der Vorrichtung, da kein separater Körper 16 zur Bestimmung der einfachen Höhe $H_0$ des Keilrippenriemens 1 und damit zur Einstellung des Nullwertes 9 als Bezugswert mitgeführt werden muss. In gleicher Weise muss kein separates Referenzstück 4 mitgeführt werden. Gerade bei Keilrippenriemen 1, die sich an schlecht zugänglichen Stellen befinden, wird durch diese Vorrichtung verhindert, dass das Referenzstück 4 oder der Körper 16 von der Auflagefläche 13 rutscht und verloren geht. Für die jeweilige Messung braucht die mit der Prüfung des Verschleißzustandes beauftragte Person lediglich die Auflagefläche zu drehen.

**Bezugszeichenliste**

| 1 | Keilrippenriemen |
|---|---|
| 2 | Profilrippen |
| 3 | Profilrillen |
| 4 | Referenzstück |
| 5 | Profilrippen |
| 6 | Profilrillen |
| 7 | Messuhr |
| 8 | Skala |
| 9 | Nullwert |
| 10 | Zeiger |
| 11 | Messbolzen |
| 12 | Halterung |
| 13 | Auflagefläche |
| 14 | Bereich der Skala |
| 15 | Bereich der Skala |
| 16 | Körper |
| 17 | Bereich der Skala |

| | |
|---|---|
| 18 | Keilrippenriemenrücken |
| 19 | Flanken |
| $H_0$ | einfache Höhe des Keilrippenriemens |
| $H_1$ | Gesamthöhe übereinandergelegter Abschnitte |
| Ü | Überdeckung |

**Patentansprüche**

1. Verfahren zur Bestimmung des Verschleißzustandes von Keilrippenriemen (1) mit Profilrippen (2) und Profilrillen (3), wobei zunächst die einfache Höhe ($H_0$) des zu prüfenden Keilrippenriemens (1) als Bezugswert bestimmt wird, anschließend zwei Abschnitte des benutzten Keilrippenriemens (1) derart übereinandergelegt und zusammengedrückt werden, dass die Profilrippen (2) des einen Abschnitts in die Profilrillen (3) des anderen Abschnitts greifen und diese berühren, und schließlich die Gesamthöhe ($H_1$) der zwei übereinanderliegenden Abschnitte bestimmt wird, wobei die Gesamthöhe ($H_1$) in Abhängigkeit von der einfachen Höhe ($H_0$) ein Maß für den Verschleißzustand des Keilrippenriemens (1) ist.

2. Verfahren nach Anspruch 1, wobei die Überdeckung (Ü) der Profilrippen (2) der übereinandergelegten Abschnitte aus dem zweifachen Bezugswert ($H_0$) abzüglich der Gesamthöhe ($H_1$) bestimmt wird, und die Uberdekkung (Ü) proportional zum Verschleißzustand des Keilrippenriemens (1) ist.

3. Verfahren zur Bestimmung des Verschleißzustandes von Keilrippenriemen (1) mit Profilrippen (2) und Profilrillen (3), wobei zunächst ein Referenzstück (4) mit vorgegebenen Profilrippen (5) und Profilrillen (6) hergestellt und die einfache Höhe ($H_0$) des Keilrippenriemens (1) bestimmt wird, anschließend das Referenzstück (4) und ein Abschnitt des benutzten Keilrippenriemens (1) derart übereinandergelegt und zusammengedrückt werden, dass die Profilrippen (2) des Keilrippenriemens (1) in die Profilrillen (6) des Referenzstücks (4) greifen und diese berühren, und daraufhin die Gesamthöhe ($H_1$) der zwei übereinanderliegenden Abschnitte bestimmt wird, wobei die Abweichung der Gesamthöhe ($H_1$) von der einfachen Höhe ($H_0$) ein Maß für den Verschleißzustand des Keilrippenriemens (1) ist.

4. Verfahren nach Anspruch 3, wobei das Referenzstück (4) einen Keilrippenriemen im Neuzustand darstellt.

5. Verfahren nach Anspruch 3, wobei das Referenzstück (4) einen Keilrippenriemen im benutzten Zustand darstellt.

6. Verfahren nach einem der Ansprüche 3 bis 5, wobei die Überdeckung (Ü) der Profilrippen (2, 5) aus der Summe der vorgegebenen Höhe des Referenzstücks (4) und der einfachen Höhe ($H_0$) der Keilrippenriemens (1) abzüglich der Gesamthöhe ($H_1$) bestimmt wird, wobei die Überdeckung (Ü) proportional zum Verschleißzustand des Keilrippenriemens (1) ist.

**Claims**

1. Method for determining the state of wear of V-ribbed belts (1) having profile ribs (2) and profile grooves (3), first the simple height ($H_0$) of the V-ribbed belt (1) to be tested being determined as a reference value, subsequently two portions of the used V-ribbed belt (1) being laid one above the other and pressed together in such a way that the profile ribs (2) of one portion engage into the profile grooves (3) of the other portion and touch these, and, finally, the overall height ($H_1$) of the two portions lying one above the other being determined, the overall height ($H_1$) as a function of the simple height ($H_0$) being a measure of the state of wear of the V-ribbed belt (1).

2. Method according to Claim 1, the overlap (Ü) of the profile ribs (2) of the portions laid one above the other being determined from double the reference value ($H_0$) minus the overall height ($H_1$) , and the overlap (Ü) being proportional to the state of wear of the V-ribbed belt (1).

3. Method of determining the state of wear of V-ribbed belts (1) having profile ribs (2) and profile grooves (3), first a reference piece (4) having predetermined profile ribs (5) and profile grooves (6) being produced, and the simple height ($H_0$) of the V-ribbed belt (1) being determined, subsequently the reference piece (4) and a portion of the used V-ribbed belt (1) being laid one above the other and pressed together in such a way that the profile ribs (2) of the V-ribbed belt (1) engage into the profile grooves (6) of the reference piece (4) and touch these, and, thereupon, the overall height ($H_1$) of the two portions lying one above the other being determined, the deviation of the overall height ($H_1$) from the simple height ($H_0$) being a measure of the state of wear of the V-ribbed belt (1).

4. Method according to Claim 3, the reference piece (4) being a V-ribbed belt in the new state.

5. Method according to Claim 3, the reference piece (4) being a V-ribbed belt in the used state.

6. Method according to one of Claims 3 to 5, the overlap (Ü) of the profile ribs (2, 5) being determined from the sum of the predetermined height of the reference piece (4) and the simple height ($H_0$) of the V-ribbed belt (1) minus the overall height ($H_1$), the overlap (Ü) being proportional to the state of wear of the V-ribbed belt (1).

## Revendications

**1.** Procédé pour déterminer l'état d'usure de courroies trapézoïdales à nervures (1) comprenant des nervures profilées (2) et des gorges profilées (3), au cours duquel la simple hauteur ($H_0$) de la courroie trapézoïdale à nervures (1) à tester est d'abord utilisée comme valeur de référence, puis deux portions de la courroie trapézoïdale à nervures (1) utilisée sont superposées et pressées l'une contre l'autre de telle sorte que les nervures profilées (2) d'une portion s'engagent dans les gorges profilées (3) de l'autre portion et soient en contact avec celles-ci, et finalement la hauteur totale ($H_1$) de deux portions superposées est déterminée, la hauteur totale ($H_1$) étant une dimension pour l'état d'usure de la courroie trapézoïdale à nervures (1) en fonction de la hauteur simple ($H_0$).

**2.** Procédé selon la revendication 1, dans lequel la superposition (Ü) des nervures profilées (2) des portions superposées est déterminée à partir de la valeur de référence ($H_0$) multipliée par deux moins la hauteur totale ($H_1$), et la superposition (Ü) est proportionnelle à l'état d'usure de la courroie trapézoïdale à nervures (1).

**3.** Procédé pour déterminer l'état d'usure de courroies trapézoïdales à nervures (1) comprenant des nervures profilées (2) et des gorges profilées (3), au cours duquel une pièce de référence (4) avec des nervures profilées (5) et des gorges profilées (6) prédéfinies est d'abord fabriquée, et la hauteur simple ($H_0$) de la courroie trapézoïdale à nervures (1) est déterminée, puis la pièce de référence (4) et une portion de la courroie trapézoïdale à nervures (1) utilisée sont superposées et pressées l'une contre l'autre, de telle sorte que les nervures profilées (2) de la courroie trapézoïdale à nervures (1) s'engagent dans les gorges profilées (6) de la pièce de référence (4) et soient en contact avec celles-ci, puis la hauteur totale ($H_1$) des deux portions superposées est déterminée, l'écart entre la hauteur totale ($H_1$) et la hauteur simple ($H_0$) étant une mesure de l'état d'usure de la courroie trapézoïdale à nervures (1).

**4.** Procédé selon la revendication 3, dans lequel la pièce de référence (4) est une courroie trapézoïdale à nervures à l'état neuf.

**5.** Procédé selon la revendication 3, dans lequel la pièce de référence (4) est une courroie trapézoïdale à nervures à l'état usé.

**6.** Procédé selon l'une quelconque des revendications 3 à 5, dans lequel la superposition (Ü) des nervures profilées (2, 5) est déterminée à partir de la somme de la hauteur prédéfinie de la pièce de référence (4) et de la hauteur simple ($H_0$) de la courroie trapézoïdale à nervures (1) moins la hauteur totale ($H_1$), la superposition (Ü) étant proportionnelle à l'état d'usure de la courroie trapézoïdale à nervures (1).

FIG. 1

FIG. 2

FIG. 3

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2000074603 A
- JP 10332307 A
- US 3477133 A
- US 3940856 A